# EUROPÄISCHE PATENTANMELDUNG

(11) **EP 3 722 033 A1**
(43) Veröffentlichungstag der Anmeldung: **14.10.2020**
(21) Anmeldenummer: 19168891.0
(22) Anmeldetag: 12.04.2019
(51) Int. Cl.: B23C 5/10

(54) **FRÄSWERKZEUG ZUM FRÄSEN VON WERKSTÜCKEN**

(71) Anmelder: Hptec GmbH, 88214 Ravensburg (DE)
(72) Erfinder: Netzer, Stefan, 88364 Wolfegg (DE)
(74) Vertreter: Otten, Roth, Dobler & Partner mbB Patentanwälte

(57) **Zusammenfassung**

Es wird ein Fräswerkzeug (1) zum Fräsen von Werkstücken mit einem um eine Drehachse (6) drehbaren Schaft (2) und wenigstens einem längs der Drehachse (6) am Schaft (2) angeordneten Fräsabschnitt (3), wobei der Fräsabschnitt (3) wenigstens eine erste, am Umfang angeordnete Schneide (4) und eine zweite, am Umfang angeordnete Schneide (4) umfasst, wobei die erste und die zweite Schneide (4) sich in Richtung Drehachse (6) im Wesentlichen über den Fräsabschnitt (3) erstrecken und in Dreh-/ Umfangsrichtung (7) betrachtet nebeneinander und/oder hintereinander angeordnet sind, wobei in Bezug zur Drehachse (6) die erste Schneide (4) in einem ersten Winkel (α) und die zweite Schneide (4) in einem zweiten Winkel (β) angeordnet sind, wobei wenigstens zwischen der ersten und der zweiten Schneide (4) zumindest eine erste Spanaufnahme (5) zum Aufnehmen eines abgeschnittenen Spans des Werkstückes, insb. eine erste Spannut (5, 8) angeordnet ist, vorgeschlagen, das wenigstens teilweise die Nachteile des Standes der Technik verbessert, insb. die Gratbildung gerade auch bei faserhaltigen bzw. faserverstärkten Werkstoffen reduziert oder sogar vollständig verhindert. Dies wird erfindungsgemäß dadurch erreicht, dass der erste Winkel (a) nicht gleich dem zweiten Winkel (β) ist.

## Beschreibung

Die Erfindung betrifft ein Fräswerkzeug zum Fräsen von Werkstücken nach dem Oberbegriff des Anspruchs 1.

### Stand der Technik

Es sind bereits verschiedene Fräswerkzeuge bekannt, z.B. aus der DE 20 2017 101 382 U1, die neben gängigen Materialien wie diverse Metalle oder "einfache" Kunststoffe auch eine Bearbeitung spezieller Materialien erlauben, zum Beispiel die Bearbeitung von faserhaltigen Materialien wie kohlenfaserverstärkte Kunststoffen, glasfaserverstärkter Kunststoffen etc..

Kohlenstofffaserverstärkter Kunststoff, auch carbonfaserverstärkter Kunststoff (CFK) ist ein Verbundwerkstoff, bei dem Kohlenstofffasern in eine KunststoffMatrix eingebettet sind. Die Matrix dient zur Verbindung der Fasern sowie zum Füllen der Zwischenräume. Dagegen ist glasfaserverstärkter Kunststoff, kurz GFK (engl. GFRP = glassfibre reinforced plastic), ein Faser-Kunststoff-Verbund aus einem Kunststoff und Glasfasern.

Der Grundkörper bzw. sog. Schaft des Fräsers weist üblicherweise an einem Endabschnitt einen bzw. mehrere sog. Hauptzüge auf, die jeweils als (gewendelte) Vertiefung/Nut gegenüber dem durch das rotierende Fräswerkzeug eingenommen Rotationsvolumen ausgebildet ist. Diese sog. Hauptzüge sind jeweils mit einer Schneidkante als Hauptschneide versehen und als sog. "T1"-Schneidnut/-kante bezeichnet. Über die gewendelte Vertiefung/Nut kann das bei der spanabhebenden Bearbeitung abgenommene Material des Werkstücks gegebenenfalls auch (wie bei einer Förderwendel) abtransportiert werden, so dass diese jeweils als Spanaufnahme und Spantransportnut ausgebildet ist. Meist sind bei heutigen Fräswerkzeugen, insb. bei sog. Schruppfräsern, mehrere, insb. vier oder mehr Hauptzüge bzw. sog. Hauptschneiden (T1-Schneidkanten) vorhanden, die parallel zueinander und meist jeweils wendelartig sich um die Drehachse des Schaftes bzw. des Grundkörpers erstrecken, d.h. quasi in einem ersten Winkel bzw. "T1-Winkel" in Bezug zur Drehachse stehen/steigen.

Im Gegensatz zu Schlichtfräsern sind Schruppfräser am unterbrochenen Profil der Werkzeugschneide zu erkennen, die ein schnelles Brechen des Spanes ermöglicht und daher oftmals nicht für die Herstellung einer gleichmäßigen und hohen Oberflächengüte verwendet werden. So weisen diese oft auch eine Spanleitstufe auf, über die der abgetragene Span fließt und als sog. "T2"-Spanbrechernut bezeichnet wird. Dieses Profil bzw. diese Spanleitstufen sind vielmals wie die Hauptschneiden wendelartig bzw. winklig in Bezug zur Drehachse ausgerichtet, d.h. quasi in einem "T2-Winkel" in Bezug zur Drehachse stehen/steigen.

Ziel der Profilierung des Schruppfräsers ist es jeweils ein möglichst kurzspanendes Verhalten des abgetragenen Materials zu erreichen, das zwar Vibrationen und damit schlechtere Oberflächengüten begünstigt, aber dafür gegenüber einem langspanenden Verhalten andere wesentliche Vorteile - allen voran die wesentlich bessere Spanabfuhr - ergibt. Aufgrund des guten Zeitspanvolumens eignen sich Schruppfräswerkzeuge hervorragend für Arbeitsgänge, bei denen es z.B. gilt, bis auf ein Schlichtaufmaß möglichst effektiv und schnell Material möglichst in einem Arbeitsgang abzunehmen, insb. vor oder ohne nachfolgendem Schlichten, und wenn eine besonders hohe Maßgenauigkeit und Oberflächengüte nicht erforderlich ist.

Bei faserhaltigen bzw. faserverstärkten Werkstoffen ist jedoch besonders nachteilig, dass die bisherigen Fräswerkzeuge, insb. Schruppfräser, eine ausgeprägte Gratbildung, insb. mit aus dem Verbund bzw. der Matrix herausstehenden Faserenden, generieren. Dieser Grat bzw. diese Faserenden müssen dann bei den meisten Anwendungen entsprechend nachbearbeitet bzw. abgeschliffen werden, was entsprechend wirtschaftlich bzw. zeitlich aufwändig ist.

### Aufgabe und Vorteile der Erfindung

Aufgabe der Erfindung ist es demgegenüber, ein Fräswerkzeug vorzuschlagen, das wenigstens teilweise die Nachteile des Standes der Technik verbessert, insb. die Gratbildung gerade auch bei faserhaltigen bzw. faserverstärkten Werkstoffen reduziert oder sogar vollständig verhindert.

Diese Aufgabe wird, ausgehend von einem Fräswerkzeug der einleitend genannten Art, durch die Merkmale des Anspruchs 1 gelöst. Durch die in den Unteransprüchen genannten Maßnahmen sind vorteilhafte Ausführungen und Weiterbildungen der Erfindung möglich.

Dementsprechend zeichnet sich ein erfindungsgemäßes Fräswerkzeug dadurch aus, dass der erste Winkel nicht gleich dem zweiten Winkel ist. Das bedeutet, dass z.B. bei wenigstens zwei wendelförmige Schneiden bzw. sog. Hauptschneiden deren Ausrichtung bzw. der erste Winkel der ersten Haupt-/Schneide, d.h. der erste "T1-Winkel" im Sinn der Erfindung, und der zweite Winkel der zweiten Haupt-/Schneide, d.h. der zweite "T1-Winkel" im Sinn der Erfindung, bezogen auf die Drehachse nicht gleich bzw. unterschiedlich/verschieden sind. Bei z.B. vier sog. "Haupt-Schneiden" bzw. "T1-Schneiden" bzw. T1-Kanten können beispielsweise zwei sog. "erste Schneiden" bzw. Wendeln jeweils in einem ersten Winkel und die beiden anderen sog. "zweiten Schneiden" bzw. Wendeln in einem anderen, d.h. "zweiten Winkel", angeordnet/ausgerichtet werden, wobei diese gemäß der Erfindung unterschiedlich bzw. ungleich sind. Auch können gemäß der Erfindung alle vier Winkel, d.h. "T1-Winkel" im Sinn der Erfindung, dieser vier Hauptschneiden bzw. "T1-Schneidkanten" ungleich/unterschiedlich ausgebildet werden.

Es hat sich überraschenderweise mit Hilfe dieser Maßnahme gezeigt, dass im Vergleich zum Stand der Technik v.a. die Gratbildung hiermit deutlich reduziert bzw. unter bestimmten Betriebsbedingungen vollständig beseitigt werden kann. Vor allem bei faserhaltigen bzw. faserverstärkten Werkstoffen kann eine Reduktion bzw. vollständige Beseitigung/Vermeidung von aus der Matrix bzw. dem Verbund herausstehenden/überstehenden Fasern bzw. Faserenden erreicht werden. Hierdurch kann auf eine weitere Nachbearbeitung ganz oder zumindest teilweise verzichtet werden. Dies ist z.B. gerade auch beim Fräsen bzw. der Fräsbearbeitung von elektronischen Leiterplatten bzw. Platinen oder dergleichen aus faserhaltigen bzw. faserverstärkten Werkstoff von großem Vorteil. Dementsprechend kann der zeitliche und wirtschaftliche Aufwand beim Fräsen bzw. der Fräsbearbeitung entsprechender Werkstücke deutlich reduziert werden.

Die unterschiedlichen Winkel der Hauptschneiden bzw. "T1-Schneidkanten" stellen zudem eine vollständige Abkehr der Jahrzehnte bzw. Jahrhunderte alten Praxis mit immer identischen Winkeln der Hauptschneiden bzw. "T1-Schneidkanten". So waren bislang alle Fräswerkzeuge immer mit identischen Winkeln aller Wendeln bzw. Hauptschneiden/"T1-Nuten" u.a. als ein- oder mehrgängige Wendeln wie z.B. Doppel-Helix- bzw. Doppelwendel-Fräser mit zwei parallel ausgerichteten Spantransportnuten bzw. sog. "T1-Nuten" im Sinn der Erfindung bekannt. Auch bei den bisherigen Fräswerkzeugen, bei denen der Winkel der Hauptschneiden bzw. "T1-Schneidkanten" gleich Null war, d.h. parallel zur Drehachse, waren immer alle Hauptschneiden bzw. "T1-Schneidkanten" parallel zur Drehachse und somit gleich bzw. identisch. Die Erfindung steht somit in krassem Gegensatz zu diesem bisherigen Grundprinzip der gleichen Winkel bei Fräswerkzeugen.

In einer besonderen Weiterbildung der Erfindung ist in Bezug zur Drehachse der erste Winkel ein positiver, insb. spitzwinkliger Winkel und der zweite Winkel ein negativer, insb. spitzwinkliger Winkel, so dass insb. die erste Schneide als eine rechtsgängige Schneidenwendel/-helix und die zweite Schneide als eine linksgängige Schneidenwendel/-helix ausgebildet sind. Hiermit wird erreicht, dass beispielsweise beim Fräsen bzw. der Fräsbearbeitung von faserhaltigen bzw. faserverstärkten Werkstücken die erste Schneide, insb. rechtsgängige Schneide/ -kante, die Fasern bzw. Faserenden in eine erste Richtung verstellen/umbiegen bzw. mit Kraft/Druck beaufschlagen und die zweite Schneide, insb. linksgängige Schneide/-kante, die Fasern bzw. Faserenden in eine zweite, der ersten Richtung entgegengesetzte Richtung verstellen/umbiegen bzw. mit Kraft/Druck beaufschlagen. Auch werden hierbei die Werkstückschwingungen verringert, da das Fräswerkzeug in vorteilhafter Weise sozusagen "up/down-spiralisiert", d.h. eine gegenläufige Gängigkeit/Ausrichtung von Schneiden bzw. Schneidwendeln aufweist

Dementsprechend werden die Fasern bzw. Faserenden in vorteilhafter Weise abgebrochen bzw. abgeschnitten und damit entfernt. Eine Gratbildung und v.a. ein Grat aus überstehenden bzw. herausstehenden Fasern/Faserenden aus dem Verbund bzw. der Matrix wird hiermit besonders wirkungsvoll reduziert bzw. verhindert.

Alternativ oder in Kombination zur zuvor genannten Variante der Erfindung mit gegenläufigen Wendeln/Helices ist gemäß der Erfindung auch denkbar, unterschiedliche bzw. ungleiche Beträge des ersten Winkels und des zweiten Winkels vorzusehen. Das bedeutet, dass z.B. das Fräswerkzeug bzw. der Fräsabschnitt wenigstens teilweise z.B. als Mehrfach- oder Doppel-Helix mit Hauptschneiden bzw. T1-Schneiden/-kanten mit verschiedenen Steigungen ausgebildet werden kann. Entsprechend verändert bzw. verringert sich der Abstand der Schneidkanten in Richtung der Längs-/Drehachse des Fräswerkzeugs bzw. Fräsabschnitts.

Vorzugsweise ist in Bezug zur Drehachse der Betrag des ersten Winkels gleich dem Betrag des zweiten Winkels. Hiermit können Vibrationen bzw. Resonanzen des Fräswerkzeugs und/oder des Werkstückes reduziert werden, was sich bzgl. der Bearbeitungsgüte und/oder -geschwindigkeit positiv auswirkt.

Vorteilhafterweise sind wenigstens zwischen zwei ersten Schneiden eine zweite Spanaufnahme, insb. Spannut, und/oder zwischen zwei zweiten Schneiden eine dritte Spanaufnahme, insb. Spannut, angeordnet. So sind zumindest zwei erste Schneiden in Dreh- bzw. Umfangsrichtung des Fräswerkzeuges nebeneinander angeordnet und weisen zwei gleiche bzw. identische sog. erste Winkel bzw. "T1-Winkel" im Sinn der Erfindung auf. In Dreh- bzw. Umfangsrichtung neben diesen wenigsten zwei Schneiden/Schneidkanten mit gleichem ersten Winkel ist sodann in vorteilhafter Weise wenigstens eine oder zwei zweite Schneiden bzw. Schneidkanten mit sog. zweiten Winkel bzw. zweitem "T1-Winkel" angeordnet, wobei gemäß der Erfindung die ersten und die zweiten Winkel bzw. "T1-Winkel" ungleich bzw. unterschiedlich sind, z.B. einerseits positiv bzw. rechtsgängig und andererseits negativ bzw. linksgängig ausgerichtet. Dies wirkt sich vorteilhaft bzw. stabilisierend auf die Fräsbearbeitung auf.

In einer bevorzugten Variante der Erfindung sind in Dreh- bzw. Umfangsrichtung wenigstens ein erstes und ein zweites Frässegment vorgesehen, wobei das erste Frässegment die erste/ersten Schneide/Schneiden und das zweite Frässegment die zweite/zweiten Schneide/Schneiden aufweist. Dies verbessert zusätzlich die Bearbeitung des Werkstückes bzw. reduziert Vibrationen bei der Bearbeitung und erhöht die Bearbeitungsgüte. Auch wird die Herstellbarkeit bzw. die Ausformung der Schneiden, Schneidnuten, Spankanäle verbessert.

Vorzugsweise ist zwischen dem ersten und dem zweiten Frässegment wenigstens eine vierte Spanaufnahme, insb. Spannut bzw. Längsnut, angeordnet. Hiermit werden in vorteilhafter Weise einerseits die zuvor genannten Segmente klarer durch diese Spannut/Längsnut voneinander getrennt, was sich wiederum beim Fräsen bzgl. Vibrationen etc. vorteilhaft auswirkt. Andererseits wird die Herstellung bzw. Fertigung des erfindungsgemäßen Fräswerkzeuges verbessert, insb. auch Überschneidungen bzw. nachteilige Ausformungen im Übergangs- bzw. Grenzbereich von zwei o.g. Segmenten und/oder von zwei Hauptschneiden mit ungleichen Winkeln gemäß der Erfindung.

Darüber hinaus wird mittels der vierten Spanaufnahme der Abtransport der generierten Späne während des Fräsens verbessert und/oder Grate, insb. überstehende Fasern/Faserenden des Werkstückes bekommen "Raum" und/oder Zeit um sich in der vierte Spanaufnahme bzw. Nut "aufzustellen", so dass sie anschließend von der nachfolgenden, anders ausgerichteten Schneide bzw. Schneidkante in vorteilhafter Weise abgetrennt bzw. entfernt werden können. Dies verbessert wiederum die Beseitigung bzw. Reduzierung eines Grates, was sich in Bezug auf eine entspr. Nachbearbeitung zusätzlich positiv auswirkt.

Beispielsweise ist die erste Spanaufnahme als die zweite oder dritte oder vierte Spanaufnahme ausgebildet. Dies bedeutet, dass die zweite oder dritte oder vierte Spanaufnahme die Hauptschneide bzw. die Schneidkante, d.h. sog. "T1-Schneidnut", ausbildet und entsprechend mit dem ersten und/oder dem zweiten Winkel gemäß der Erfindung ausgerichtet ist. Dies ist bzgl. der verschiedenen Varianten, die gemäß der Erfindung von Vorteil sind, von Bedeutung.

In einer vorteilhaften Ausführungsform der Erfindung ist quer zur ersten und/oder zweiten Schneide wenigstens eine fünfte Spanaufnahme, insb. Spannut bzw. sog. "T2-Spanbrechernut", vorgesehen, die insbesondere den Verlauf der entsprechenden Schneide unterbricht und/oder eine Ausnehmung in der entsprechenden Schneide darstellt. Hiermit kann eine vorteilhaft verbesserte Spanentstehung sowie Spanentfernung verwirklicht werden, da die Späne hiermit nur sehr kurz werden. Diese fünfte Spanaufnahme, insb. Spannut bzw. sog. "T2-Spanbrechernut", verhindert wirkungsvoll die Ausbildung von langen Spänen, die ggf. den Fräsprozess beeinträchtigen bzw. stören.

Auch kann eine Profilierung der Mantelfläche des Schaftes bzw. Fräsabschnittes und/oder der Schneide/n bzw. der Schneidkante/n realisiert werden. Letzteres kann die Reduktion bzw. das Verhindern einer Gratbildung weiter verbessern. So kann gerade bei faserhaltigen bzw. faserverstärkten Werkstoffen eine besonders ausgeprägte Reduktion bzw. vollständige Beseitigung/Vermeidung von aus der Matrix bzw. dem Verbund herausstehenden/überstehenden Fasern bzw. Faserenden erreicht werden. Hierdurch kann auf eine weitere Nachbearbeitung ganz oder zumindest teilweise verzichtet werden. Dementsprechend kann der zeitliche und wirtschaftliche Aufwand beim Fräsen bzw. der Fräsbearbeitung entsprechender Werkstücke in besonderer Weise reduziert werden.

Vorteilhafterweise ist in Bezug zur Drehachse die fünfte Spanaufnahme in einem dritten Winkel, insb. in einem bzgl. der Längs- bzw. Drehachse des Fräswerkzeuges stumpfwinkligen Winkel angeordnet, so dass entgegen der Drehrichtung betrachtet die fünfte Spanaufnahme von einem Endbereich des Fräsabschnittes zum Schaft hin ausgerichtet ist. Mit Hilfe dieser Maßnahme wird in vorteilhafter Weise erreicht, dass ein mittels der Schneide erzeugter Span vom vorderen Endbereich des Werkzeuges in Richtung des hinteren Bereiches bzw. zum Fixierbereich des Werkezuges, d.h. an dem das Fräswerkzeug in/an der Fräsmaschine bzw. Werkzeugmaschine wie CNC-Maschine oder dergleichen, eingespannt bzw. fixiert ist. Dies verhindert wirkungsvoll eine Beeinträchtigung des Werkstückes und/oder Werkzeuges durch eine nachteilige Ansammlung von Spännen im Bearbeitungsbereich.

Vorzugsweise ist in Bezug zur Drehachse die vierte Spanaufnahme in einem vierten Winkel und/oder parallel zur Drehachse angeordnet. Gerade die parallele Ausrichtung der vierten Spanaufnahme ermöglicht eine vorteilhafte Fertigung und/oder eine klare Segmentierung der o.g. Segmente, insbesondere sind hierbei vier Segmente bzw. Viertel-Kreissegmente von Vorteil. Vorteilhafterweise weist wenigstens die erste Schneide eine von der fünften Spanaufnahme mehrfach unterbrochene, erste Schneidkante/-helix auf, so dass die erste Schneidkante mehrere erste Kantenabschnitte aufweist, und/oder weist wenigstens die zweite Schneide eine von der fünften Spanaufnahme mehrfach unterbrochene, zweite Schneidkante/-helix auf, so dass die zweite Schneidkante mehrere zweite Kantenabschnitte aufweist. Hiermit kann die Spanabfuhr bzw. der Spanabtransport verbessert und/oder eine Gratbildung verringert bzw. verhindert werden, insb. faserhaltigen bzw. faserverstärkten Werkstoffen können hierdurch aus der Matrix bzw. dem Verbund herausstehenden bzw. überstehenden Fasern bzw. Faserenden vorteilhaft beseitigt werden.

In einer vorteilhaften Variante der Erfindung sind die erste Schneide und/oder erste Schneidkante und/oder die zweite Schneide und/oder zweite Schneidkante und/oder ersten Kantenabschnitte und/oder zweiten Kantenabschnitte als Teilstück einer Schraubenlinie bzw. Helix bzw. Wendel ausgebildet. Auch diese Maßnahme verbessert die Spanabfuhr bzw. der Spanabtransport und/oder verringert bzw. verhindert eine Gratbildung, insb. faserhaltigen bzw. faserverstärkten Werkstoffen.

### Ausführungsbeispiel

Ein Ausführungsbeispiel der Erfindung ist in der Zeichnung dargestellt und wird anhand der Figuren nachfolgend näher erläutert.

Im Einzelnen zeigt:
- Figur 1: eine schematische Seitenansicht eines Fräswerkzeugs gemäß der Erfindung,
- Figur 2: eine schematische perspektivische Ansicht des Fräswerkzeugs gemäß Figur 1 und
- Figur 3: eine schematische Draufsicht auf das Fräswerkzeug gemäß Figur 1.

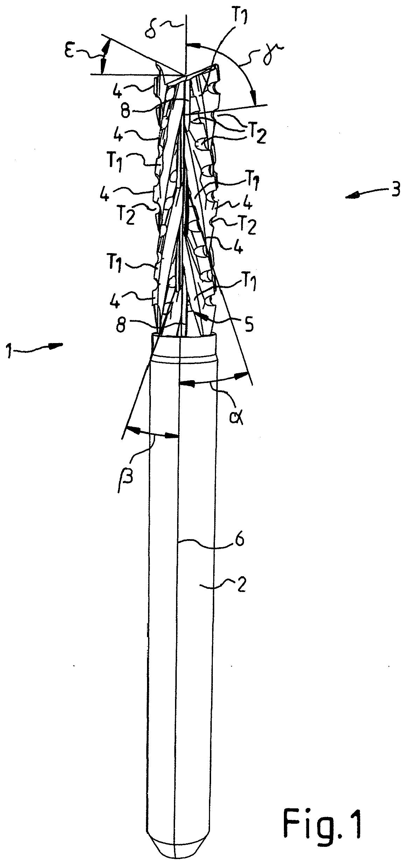

In Figur 1 ist schematisch ein Fräswerkzeug 1 gemäß der Erfindung mit einem in eine Werkzeugmaschine einspannbaren Schaft 2 und mit einem Fräsabschnitt 3 dargestellt. Der Fräsabschnitt 3 umfasst mehrere Hauptzüge bzw. Hauptschneiden 4, d.h. sog. "T1-Hauptschneiden", die jeweils mehrere, von einer bzw. mehreren sog. "T2"-Spanbrecher-Nuten (mehrfach) unterbrochenen Schneidkanten/-wendeln bzw. Schneidkantenabschnitte aufweisen. Die Hauptschneide 4 wird üblicherweise auch als sog. "T1"-Schneidnut bzw. T1-Schneidkante bezeichnet werden. Diese Hauptschneiden 4 bzw. T1-Schneidkanten 4 werden jeweils mittels einer in Drehrichtung vor der jeweiligen Kante 4 angeordneten, gewendelten Vertiefung/Nut 5 gebildet.

In Figur 1 wird deutlich, dass gemäß der Erfindung und in Bezug zur Drehachse 6 bzw. Längsachse 6 des Fräswerkzeuges 1 eine erste Schneide 4 mit einem ersten Winkel α (Alpha, z.B. ca. 20° +/-20°) und eine zweite Schneide 4 mit einem zweiten Winkel β (Beta, z.B. ca. 20° +/-20°) vorgesehen sind. So bildet hier die erste Schneide 4 bzw. erste Hauptschneide 4 eine linksgängige Wendel/Helix, die im Winkel α zur Drehachse 6 ausgerichtet ist, und die zweite Schneide 4 bzw. zweite Hauptschneide 4 eine rechtsgängige Wendel/Helix, die im Winkel β zur Drehachse 6 ausgerichtet ist.

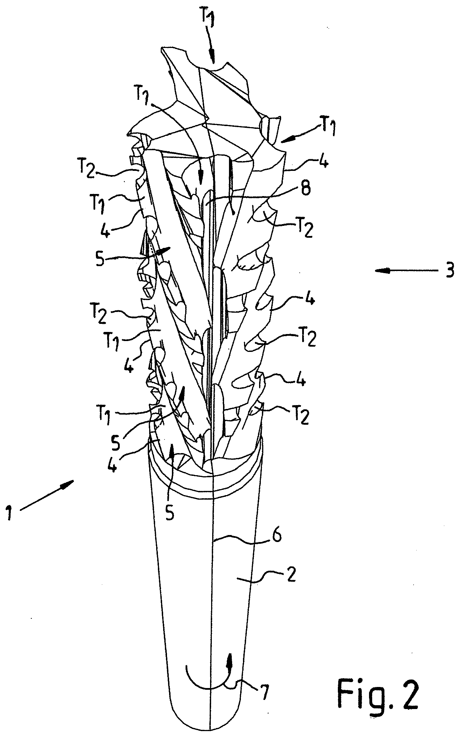

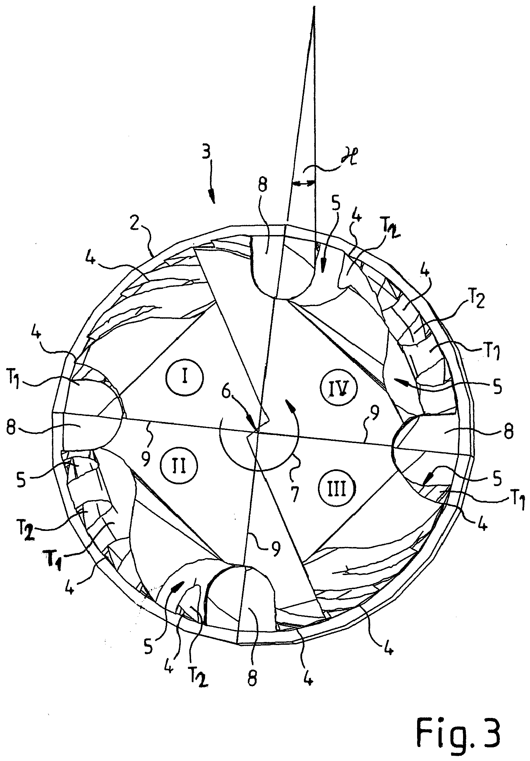

Die erste und die zweite Schneide 4 bzw. Hauptschneide 4 sind jedoch beide für eine rechts drehende Betriebsweise des Fräswerkzeuges ausgerichtet/ausgebildet. Dies wird ganz besonders auch in Figur 2 und v.a. in Figur 3 deutlich. Hier erkennt man, dass die Schneiden 4 bzw. Schneidkanten 4 jeweils in eine (rechts drehende) Drehrichtung 7 ausgerichtet sind, um Späne vom Werkstück abzutragen.

Die nicht näher dargestellten Späne werden in vorteilhafter Weise einerseits jeweils mittels der Nut 5 bzw. "T1"-Schneidnut abtransportiert. Eine Spanbrecher-Nut T2 bzw. T2-Nut ist in vorteilhafter Weise ebenfalls wendelförmig ausgebildet und in einem Winkel γ (Gamma, z.B. ca. 97° +/- 20°) zur Drehachse 6 ausgerichtet. So winden sich die einzige T2-Nut bzw. deren T2-Ausnehmungen rechtsgängig bzw. rechtsansteigend um die Drehachse 6 in einem Winkel von ca. 97°, wie dies in Figur 1 beispielhaft abgebildet ist.

Dagegen sind gemäß vorliegender Ausführungsvariante hier in vorteilhafter Weise vier Segmente I bis IV vorgesehen (vgl. Figur 3), in denen jeweils mehrere, hier vorzugsweise jeweils drei Hauptschneiden 4 bzw. Hauptzüge/T1-Nuten vorgesehen sind. In den benachbarten Segmenten I-IV wechseln sich erste Schneiden 4 und zweite Schneiden 4 ab, d.h. es wechseln sich in Drehrichtung 7 bzw. am Umfang jeweils Segmente I bis IV mit rechtsgängigen und dann mit linksgängigen Hauptschneiden 4 bzw. T1-Hauptzüge/T1-Wendel ab.

Wie in den Figuren deutlich wird, sind zwischen den Segmenten I bis IV jeweils eine Ausnehmung 8 bzw. Längsnut 8 vorgesehen, die hierdurch quasi die Segmente I bis IV abgrenzen bzw. räumlich definieren. Die abgebildete Längsnut 8 ist im Wesentlich parallel zur Drehachse 6 bzw. Längsachse 6 ausgerichtet, so dass die Segmente I bis IV sich als geradlinige Zylinderviertel entlang der Drehachse 6 erstrecken.

Alternativ hierzu können die Längsnuten 8 bzw. Ausnehmungen 8 auch wendelförmig ausgebildet werden, zum Beispiel rechtsgängig mit einem Winkel Delta, der in vorteilhafter Weise dem Winkel der rechtsgängigen Schneide 4 bzw. T1-Hauptschneide entspricht. Dann könnte dieser Winkel Delta z.B. δ = ca. 20° +/- 20° aufweisen und in Figur 1 dem Winkel β entsprechen würde, wobei die linksgängige Wendel/Helix jedoch ggf. weiterhin im Winkel α = ca. 20° ausgebildet werden könnte.

Dagegen sind bislang ausschließlich Fräswerkzeuge im Einsatz, wobei die Hauptschneiden bzw. T1-Hauptzüge gleichgängig bzw. in gleicher Weise um die Drehachse windend und mit gleichen Winkeln realisiert sind. Das dargestellte Ausführungsbeispiel weist jedoch unterschiedliche Winkel α und β auf, die zwar im Betrag, d.h. bei der dargestellten Variante z.B. ca. 20° +/- 20° aufweisen, jedoch im Vorzeichen bzw. in der Ausrichtung gegenüber der Drehachse 6 ungleich bzw. unterschiedlich sind. Hiermit werden in vorteilhafter Weise gerade bei faserhaltigen Werkstoffen/Materialien überstehende Faserenden bzw. Grate wirkungsvoll vermieden bzw. zumindest minimiert.

Wie wiederum v.a. in Figur 3 deutlich wird, ist zwischen zwei Segmenten I-IV jeweils die dritte Spannut 8 in vorteilhafter Weise vorgesehen. Hierdurch können die Späne in gewisser Weise abtransportiert werden. Im Wesentlichen werden durch diese Nut 8 bei der Fertigung des Fräswerkzeuges 1, insb. der Hauptschneiden 4 bzw. T1-Hauptzüge, nachteilige Überstände bzw. Kanten im Übergansbereich der gegenläufigen ersten und zweiten Schneiden 4 in vorteilhafter Weise vermeidbar. Diese vier dritte Spannuten 8 bzw. Längsnuten 8 sind wie oben bereits dargelegt im vorliegenden Ausführungsbeispiel parallel zur Drehachse 6 und somit im Winkel δ = 0° (Delta) ausgerichtet (vgl. Figur 1).

An der Stirnseite des Fräswerkzeuges 1 bzw. des Fräsabschnittes 3 sind beispielsweise Schneiden bzw. Flächen im Winkel ε (Epsilon, z.B. ca. 20° +/- 20°) vorgesehen, so dass auch ein stirnseitiges Fräsen realisierbar ist, z.B. zum sog. "Eintauchen" in ein Werkstück (vgl. Figur 1). Dieses Ende bzw. diese Spitze des Werkzeuges kann jedoch auch nahezu beliebig ausgeformt/ausgebildet werden, d.h. nicht nur wie abgebildet mit einem V-förmigen Querschnitt, sondern auch mit einem geraden/flachen oder (halb-)runden bzw. abgerundeten Querschnitt oder aber auch mit einer Schutzfase oder dergleichen ausgebildet werden.

Darüber hinaus ist in Figur 3 zu erkennen, dass die Hauptschneiden 4 bzw. Schneidnuten 5 jeweils bzgl. einer Längsmittelebene 9 in einem Winkel 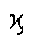 (Kappa, z.B. ca. 8° +/- 5°) angeordnet sind, um einen vorteilhaften Spanwinkel zu generieren.

Das in den Figuren dargestellte Fräswerkzeug 1 gemäß der Erfindung ist ein geometrisch relativ komplexes Werkzeug, das hier in vorteilhafter Weise rechts drehend schneidet bzw. die Hauptschneiden 4 rechts drehend ausgerichtet hat, jedoch als sog. T1-Hauptzüge nicht nur rechtsgängige bzw. rechtsspiralige Hauptschneiden 4, sondern auch linksgängige bzw. linksspiralige Hauptschneiden 4 umfasst, die in Umfangsrichtung getrennt bzw. separiert in definierten Segmenten I bis IV angeordnet sind.

Dies bewirkt in vorteilhafter Weise, dass bei der Bearbeitung von faserhaltigem Werkstoff Fasern bzw. Faserenden jeweils von eine Segment I-IV in die eine Richtung abgelenkt und vom nachfolgenden, benachbarten Segment I-IV in die andere, entgegengesetzte Richtung abgelenkt wird und damit in vorteilhafter Weise abgetrennt werden. Dies verhindert bzw. reduziert in besonderer Weise eine Gratbildung bzw. überstehende Faserenden. Eine aufwendige bzw. kostenintensivere Nachbearbeitung kann hierdurch in vielen Anwendungsfällen entfallen.

### Bezugszeichenliste

- 1: Fräswerkzeug
- 2: Schaft
- 3: Fräsabschnitt
- 4: Hauptschneide
- 5: Nut
- 6: Dreh-/Längsachse
- 7: Drehrichtung
- 8: Längsnut
α Winkel
β Winkel
γ Winkel
δ Winkel
ε Winkel
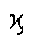 Winkel
- T1: Hauptzug
- T2: Nebenzug

## Patentansprüche

1. Fräswerkzeug (1) zum Fräsen von Werkstücken mit einem um eine Drehachse (6) drehbaren Schaft (2) und wenigstens einem längs der Drehachse (6) am Schaft (2) angeordneten Fräsabschnitt (3), wobei der Fräsabschnitt (3) wenigstens eine erste, am Umfang angeordnete Schneide (4) und eine zweite, am Umfang angeordnete Schneide (4) umfasst, wobei die erste und die zweite Schneide (4) sich in Richtung Drehachse (6) im Wesentlichen über den Fräsabschnitt (3) erstrecken und in Dreh-/Umfangsrichtung (7) betrachtet nebeneinander und/oder hintereinander angeordnet sind, wobei in Bezug zur Drehachse (6) die erste Schneide (4) in einem ersten Winkel (α) und die zweite Schneide (4) in einem zweiten Winkel (β) angeordnet sind, wobei wenigstens zwischen der ersten und der zweiten Schneide (4) zumindest eine erste Spanaufnahme (5) zum Aufnehmen eines abgeschnittenen Spans des Werkstückes, insb. eine erste Spannut (5, 8) angeordnet ist, **dadurch gekennzeichnet, dass** der erste Winkel (α) nicht gleich dem zweiten Winkel (β) ist.

2. Fräswerkzeug nach Anspruch 1, **dadurch gekennzeichnet, dass** in Bezug zur Drehachse (6) der erste Winkel (α) ein positiver, insb. spitzwinkliger Winkel (α) und der zweite Winkel (β) ein negativer, insb. spitzwinkliger Winkel (β) ist, so dass insb. die erste Schneide (4) als eine rechtsgängige Schneidenwendel und die zweite Schneide (4) als eine linksgängige Schneidenwendel ausgebildet sind.

3. Fräswerkzeug nach einem der vorgenannten Ansprüche, **dadurch gekennzeichnet, dass** in Bezug zur Drehachse (6) der Betrag des ersten Winkels (α) gleich dem Betrag des zweiten Winkels (β) ist.

4. Fräswerkzeug nach einem der vorgenannten Ansprüche, **dadurch gekennzeichnet, dass** wenigstens zwischen zwei ersten Schneiden (4) eine zweite Spanaufnahme (5), insb. Spannut (5), und/oder zwischen zwei zweiten Schneiden (4) eine dritte Spanaufnahme (5), insb. Spannut (5), angeordnet ist/sind.

5. Fräswerkzeug nach einem der vorgenannten Ansprüche, **dadurch gekennzeichnet, dass** in Dreh-/Umfangsrichtung (7) wenigstens ein erstes und ein zweites Frässegment (I bis IV) vorgesehen sind, wobei das erste Frässegment (I) die erste/ersten Schneide/Schneiden (4) und das zweite Frässegment (II) die zweite/zweiten Schneide/Schneiden (4) aufweist.

6. Fräswerkzeug nach einem der vorgenannten Ansprüche, **dadurch gekennzeichnet, dass** zwischen dem ersten und dem zweiten Frässegment (I bis IV) wenigstens eine vierte Spanaufnahme (8), insb. Spannut (8), angeordnet ist.

7. Fräswerkzeug nach einem der vorgenannten Ansprüche, **dadurch gekennzeichnet, dass** die erste Spanaufnahme (5, 8) als die zweite oder dritte oder vierte Spanaufnahme (5, 8) ausgebildet ist.

8. Fräswerkzeug nach einem der vorgenannten Ansprüche, **dadurch gekennzeichnet, dass** quer zur ersten und/oder zweiten Schneide (4) wenigstens eine fünfte Spanaufnahme (T2), insb. Spannut (T2), vorgesehen ist, die insbesondere den Verlauf der entsprechenden Schneide (4) unterbricht und/oder eine Ausnehmung (T2) in der entsprechenden Schneide (4) darstellt.

9. Fräswerkzeug nach einem der vorgenannten Ansprüche, **dadurch gekennzeichnet, dass** in Bezug zur Drehachse (6) die fünfte Spanaufnahme (T2) in einem dritten Winkel (γ), insb. in einem stumpfwinkligen Winkel (γ) angeordnet ist, so dass entgegen der Drehrichtung (7) betrachtet die fünfte Spanaufnahme (T2) von einem Endbereich des Fräsabschnittes (3) zum Schaft (2) hin ausgerichtet ist.

10. Fräswerkzeug nach einem der vorgenannten Ansprüche, **dadurch gekennzeichnet, dass** in Bezug zur Drehachse (6) die vierte Spanaufnahme (5, 8) in einem vierten Winkel (δ) oder parallel zur Drehachse (6) angeordnet ist.

11. Fräswerkzeug nach einem der vorgenannten Ansprüche, **dadurch gekennzeichnet, dass** wenigstens die erste Schneide (4) eine von der fünften Spanaufnahme (T2) mehrfach unterbrochene, erste Schneidkante (4) aufweist, so dass die erste Schneidkante (4) mehrere erste Kantenabschnitte aufweist.

12. Fräswerkzeug nach einem der vorgenannten Ansprüche, **dadurch gekennzeichnet, dass** wenigstens die zweite Schneide (4) eine von der fünften Spanaufnahme (T2) mehrfach unterbrochene, zweite Schneidkante (4) aufweist, so dass die zweite Schneidkante (4) mehrere zweite Kantenabschnitte aufweist.

13. Fräswerkzeug nach einem der vorgenannten Ansprüche, **dadurch gekennzeichnet, dass** die erste Schneide (4) und/oder erste Schneidkante (4) und/oder die zweite Schneide (4) und/oder zweite Schneidkante (4) und/oder ersten Kantenabschnitte und/oder zweiten Kantenabschnitte als Teilstück einer Schraubenlinie ausgebildet ist/sind.

14. Verwendung eines Fräswerkzeugs (1) nach einem der vorgenannten Ansprüche für das Fräsen von Werkstücken aus wenigstens teilweise faserhaltigen Werkstoffen, insbesondere kohlefaser- oder glasfaserhaltigen Kunststoffen/Verbundstoffen.
